# EUROPEAN PATENT APPLICATION

(11) **EP 4 714 317 A1**
(43) Date of publication of application: **25.03.2026**
(21) Application number: 24806719.1
(22) Date of filing: 08.05.2024
(51) Int. Cl.: A47J 42/38, A47J 47/04, B65D 49/12

(54) **GRINDER FOR SPICE JARS**

(30) Priority: 16.05.2023 ES 202330847 U
(71) Applicant: Proyectos Y Ejecuciones, S.A., 03430 Onil (Alicante) (ES)
(72) Inventor: ANTON ADSUAR, Gemma, 03430 Onil (Alicante) (ES)
(74) Representative: Ibarra Garcia, Isabel
(86) International application number: PCT/ES2024/070279
(87) International publication number: WO 2024/236208

(57) **Abstract**

The present invention discloses a grinder for spice jars that is made up of a static part attached to the mouth of the jar and on which an actuator is arranged. The static part is provided with a frangible tab in which locking means for locking the static part on the mouth of the jar are arranged therein. Advantageously, the defined configuration allows the grinder itself to be separated from the jar to which it is attached, in order to facilitate the tasks of separately recycling the different materials that make up the jar, once the product contained therein has been used up. The claimed invention is of special interest given its use in both snap-fit grinders and grinders that are screwed on the mouth of the jar.

## Description

### FIELD OF THE ART

The present invention relates to a grinder for spice jars of the type having a static part with an adaptation neck which is attached, on the one hand, to a rotary part or actuator, and on the other hand, to the mouth of a jar which contains spices or the product to be ground.

The object of the invention is to provide a device which allows the grinder itself to be separated from the jar to which it is attached, in order to facilitate the tasks of separately recycling the different materials that make up the jar, once the product contained therein has been used up.

Advantageously, the present invention can be applied interchangeably in both snap-fit grinders and grinders that are screwed on the mouth of the spice jar.

### BACKGROUND OF THE INVENTION

Spice jars which include a grinding mechanism on the mouth of the jar itself are known in the field of practical application of the invention.

When the content of the container is used up, the difference in materials from which the grinding mechanism is obtained, i.e., generally plastic, with respect to the jar, which is made of glass or a plastic of a different nature than the grinding mechanism, presents a problem for the consumer when recycling jars of this type.

More specifically, grinding mechanisms which are permanently attached to the mouth of the jar either by means of pressure or threading, using means that prevent the uncoupling of said mechanism, are known.

In the case of pressure coupling, the adaptation neck that emerges from the lower portion of the static part of the grinding mechanism includes projections that fit, by elastic deformation, into a perimeter flange of the mouth of said jar preventing its removal once placed.

In the case of grinding mechanisms which are attached by threading to the mouth of the jar, a stop or step is defined in said thread into which a complementary projection, established in the adaptation neck which emerges from the lower portion of the static part, fits by elastic deformation, preventing its removal once reaching said point.

Therefore, in grinders of this type effective recycling is not possible since it is difficult to separate the different parts making up the device.

### EXPLANATION OF THE INVENTION

The disclosed grinder for spice jars solves the aforementioned problem in a fully satisfactory manner based on a simple yet highly effective solution.

To that end, the grinder of the invention is based on the conventional structuring of devices of this type involving a static part which is attached to the mouth of the jar containing spices or the product to be ground, on which static part there is arranged a rotary part working as an actuator, such that the actuator is angularly movable with respect to the static part, and which ends in the upper portion thereof in the complementary closure cover which provides access to the corresponding outlet holes or windows for the ground product.

Therefore, in accordance with the essence of the invention, it has been envisaged that the static part includes in the adaptation neck for adapting to the mouth of the jar locking means for locking the static part on the mouth of the jar, with the particular feature that these locking means are arranged therein on at least one frangible tab provided in said static part. These locking means for locking the static part thereby prevent its relative movement with respect to the jar, preferably as a result of the presence of complementary locking means present in the mouth of the jar.

Preferably, this frangible tab will be accessible manually through a finger pull-tab, i.e., through a material discontinuity in the tab which facilitates the insertion of the finger or nail or the like, such that when the finger or nail is inserted, a lever force is exerted and the tab can be torn off, thereby allowing to separate and therefore unlock the mentioned locking means between the grinder itself and the jar containing the spices to be ground, facilitating uncoupling manoeuvres between both parts in order to be able to separately recycle these elements, one usually based on glass, and the other based on plastic, thus having a 100% assembly recyclability.

As stated above, the invention can be applied interchangeably to the two common systems for coupling grinders and jars existing on the market, either by means of a thread or pressure coupling system, since limiting the positioning of the locking elements used in both cases to the tab area or frangible tabs of the static part of the grinding mechanism will be sufficient, such that once the tab has been torn off, said mechanisms cease to be operative.

Furthermore, tearing these tabs off could additionally allow disabling the grinding mechanism so that it cannot be used with minimal guarantees on another jar or so that the jar cannot be refilled, thereby avoiding defective grinding performance due to deterioration of the mechanism as a result of being used for much longer than what it was originally designed.

### BRIEF DESCRIPTION OF THE DRAWINGS

To complement the description that will be made below and in order to help better understand the features of the invention according to a preferred practical embodiment thereof, a set of drawings is attached as an integral part of said description in which the following is depicted in an illustrative and non-limiting manner:
Figure 1 shows a perspective view of a grinder for spice jars made according to the object of the present invention, in which the grinder is properly coupled to the corresponding jar, showing a threaded coupling mechanism.
Figure 2 shows a perspective view of the assembly of Figure 1 uncoupled, in which the frangible tab has been pulled and torn off from the body of the static part.
Figure 3 shows a perspective view of the grinder that makes up the assembly of Figures 1 and 2, in an initial or operative situation.
Figures 4 and 5 show different perspective views of the grinder with the frangible tab torn off, a position in which the locking mechanism of the thread is disabled, and accordingly allows releasing said grinder from the mouth of the jar on which it is applied.
Figure 6 shows a view similar to that of Figure 2, but corresponding to an embodiment variant in which the grinder is coupled to the neck of the jar by means of a pressure locking system.
Figure 7 shows a perspective view of the grinder that makes up the assembly of Figure 6.
Figure 8 shows a perspective view of the assembly of Figure 6 properly assembled.

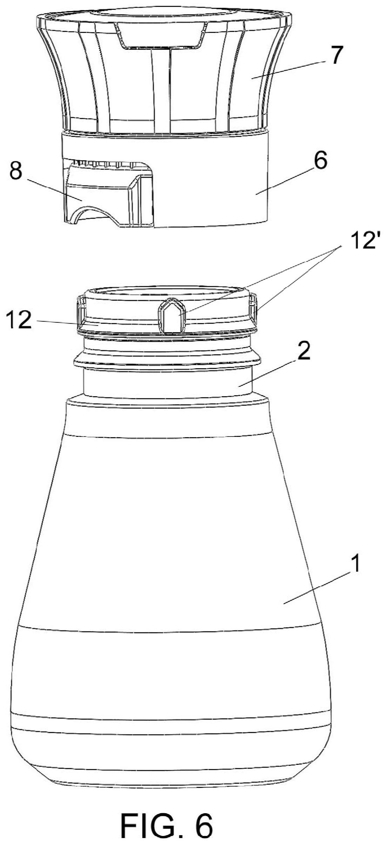

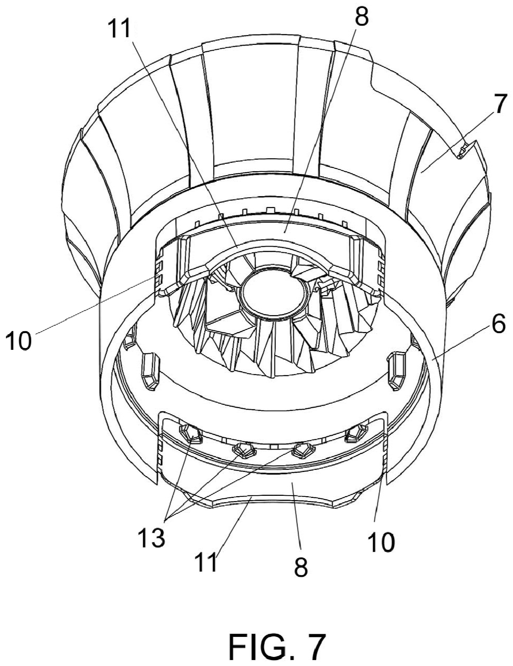

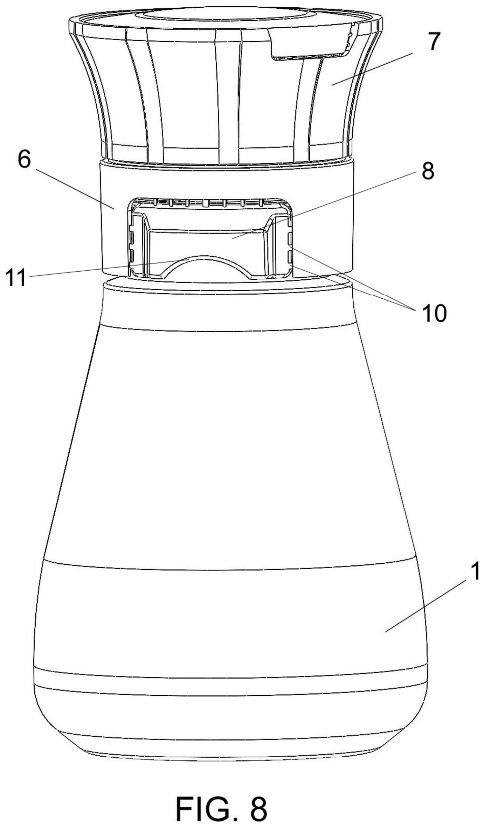

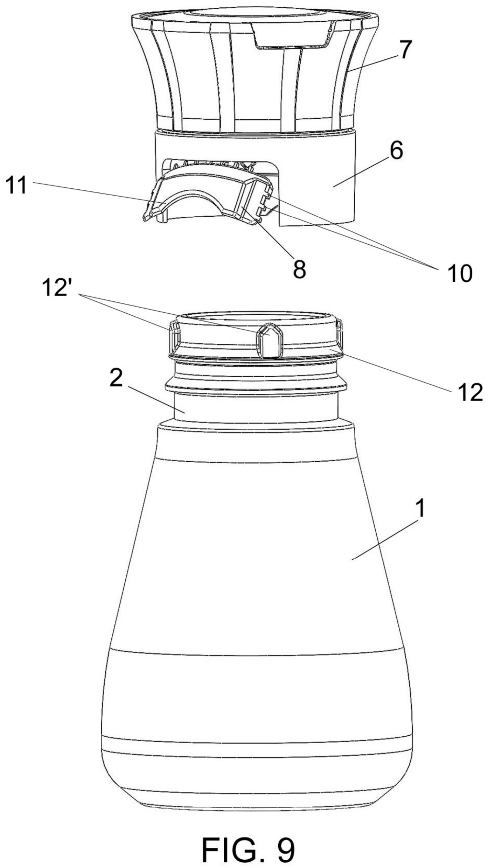

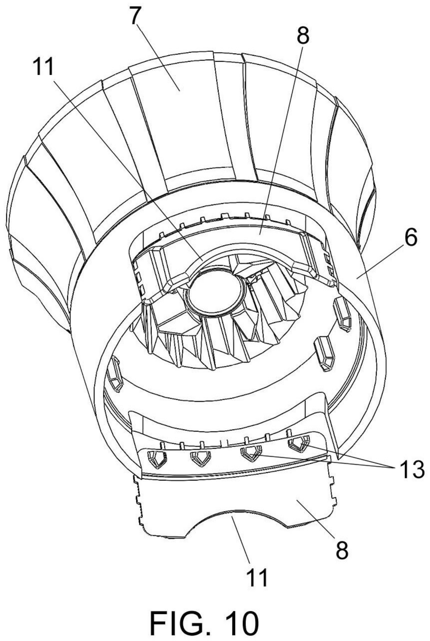

Finally, Figures 9 and 10 show respective perspective views of the variant of the grinder of Figures 6 to 8 with the tab torn off, a position in which the locking mechanism is disabled, and accordingly allows releasing said grinder from the neck of the jar on which it is applied.

### PREFERRED EMBODIMENT OF THE INVENTION

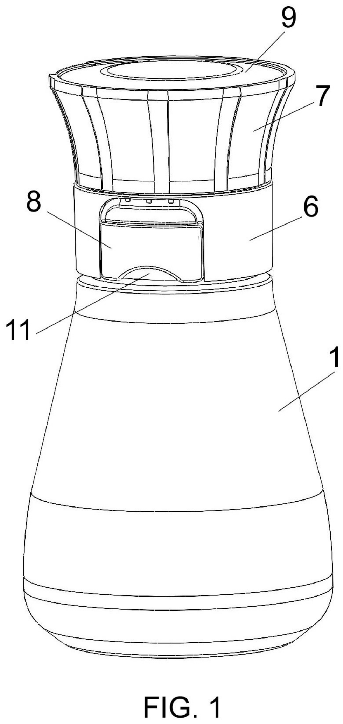

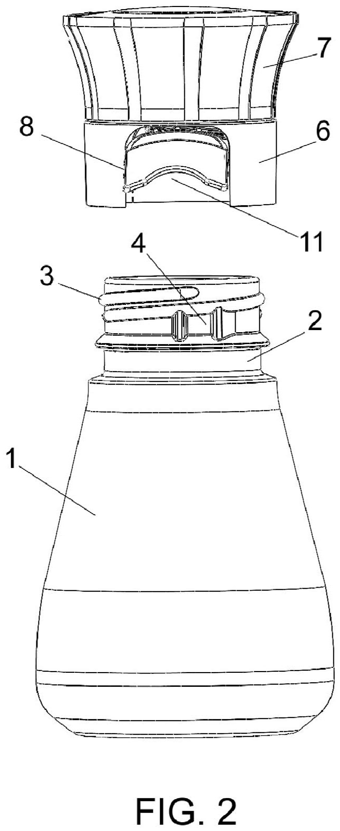

Figures 1 to 5 show a first embodiment variant of the invention in which the grinder for spice jars is intended to be placed on a jar (1) which includes a mouth (2) in which a thread (3) is established, which grinder will conventionally include an actuator (7) angularly movable with respect to the static part (6) and finished in the upper portion thereof in the complementary closure cover (9) which provides access to the corresponding outlet holes or windows for the ground product.

Therefore, in this first embodiment of the invention illustrated in Figures 1 to 5 the mouth (2) of the jar (1) has a thread (3) in which at least one step (4) is defined, while the static part (6) has the complementary threading.

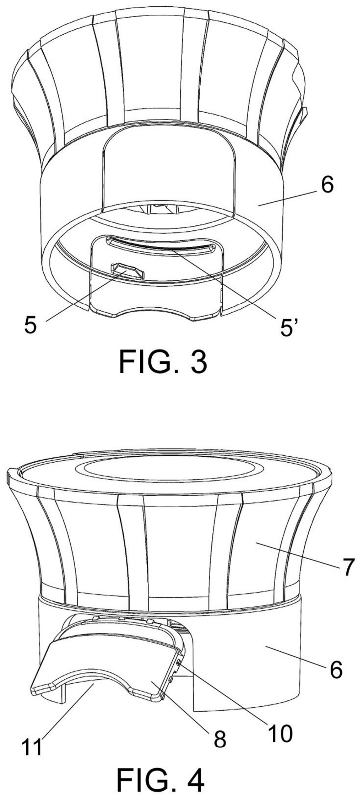

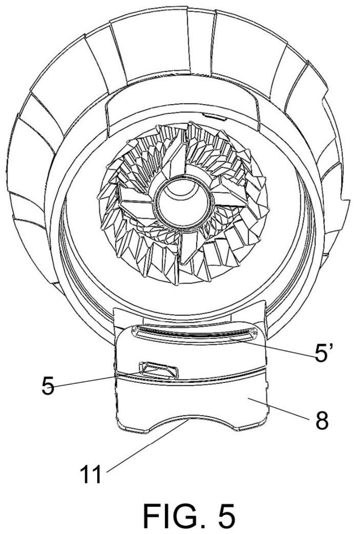

As can be seen in Figures 3 and 5, the locking means for locking the static part (6) with respect to the jar (1) are implemented as a thread segment (5') for limiting the vertical movement of the grinder with respect to the thread (3) of the mouth (2) of the jar (1); and as a projection (5) that can be fitted into the step (4) of the thread (3), with the projection (5) and the thread segment (5') being arranged therein on the frangible tab (8), allowing the locking means to be permanently released once the frangible tab (8) is torn off.

Moreover, the invention is likewise applicable to grinders for spice jars that can be pressurecoupled to the mouth (2) of the jar (1) such as that shown in the embodiment variant of Figures 6 to 10, wherein the static part (6) includes a plurality of teeth (13) that can be interlocked by pressure with a perimeter flange (12) with arrows (12') which is present in the mouth (2) of the jar (1), with the mentioned teeth (13) being arranged on the frangible tab (8) of the static part (6).

In both embodiments, the frangible tab (8) is preferably attached to the static part (6) through breaking bridges (10) or weakening lines of the material, in order to facilitate the operation of tearing off the frangible tab (8). Likewise, the frangible tab (8) preferably includes a finger pull-tab (11) or recess at its edge to facilitate the handling of the tab in the tearing or separation operation.

Therefore, in the case of the first embodiment described in detail in which the grinder and the jar (1) are attached by threading, both the projection (5) and the thread segment (5') can be detached from the mouth (2) of the jar (1) by pulling on the finger pull-tab (11), upon breaking the breaking bridges (10), and accordingly the static part (6) can be separated from the jar (1) in order to be able to independently recycle these elements of different recyclable natures.

Similarly, in the case of the second embodiment in which the grinder and the jar (1) are attached by pressure, by pulling the finger pull-tab (11), the teeth (13) of the frangible tab (8) are detached from the mouth (2) of the jar (1), and accordingly the static part (6) can be removed to be recycled with other jars of the same nature, usually plastic, with the jar (1) being properly recycled in the corresponding glass container in the case of a glass jar.

## Claims

1. A grinder for spice jars of the type that includes a static part (6) which is attached to the mouth of a jar (1) of the product to be ground, on which static part (6) there is arranged an actuator (7) angularly movable with respect to the static part (6) and finished in the upper portion thereof in a complementary closure cover (9) which provides access to the outlet holes for the ground product, **characterised in that** the static part (6) has at least one frangible tab (8) in which locking means for locking the static part (6) on the mouth (2) of the jar (1) are arranged therein.

2. The grinder for spice jars according to claim 1, **characterised in that** the locking means for locking the static part (6) are implemented as a thread segment (5') for limiting the vertical movement and as a projection (5) that can be fitted into a step (4) provided on a thread (3) established in the mouth (2) of the jar (1), with the projection (5) and the thread segment (5') being arranged on the frangible tab (8).

3. The grinder for spice jars according to claim 1, **characterised in that** the locking means for locking the static part (6) are implemented as a plurality of teeth (13) that can be interlocked by pressure with a perimeter flange (12) with arrows (12') that is provided on the mouth (2) of the jar (1), with the teeth (13) being arranged on the frangible tab (8).

4. The grinder for spice jars according to any of the preceding claims, **characterised in that** the frangible tab (8) is attached to the static part (6) through breaking bridges (10).

5. The grinder for spice jars according to any of the preceding claims, **characterised in that** the frangible tab (8) includes a finger pull-tab (11).
